Europäisches Patentamt

(19) European Patent Office

Office européen des brevets

(11) Publication number: **0 074 710**
**A1**

(12) **EUROPEAN PATENT APPLICATION**

(21) Application number: **82303992.0**

(22) Date of filing: **28.07.82**

(51) Int. Cl.³: **B 29 D 27/02**

(30) Priority: **17.09.81 GB 8128176**

(43) Date of publication of application:
**23.03.83 Bulletin 83/12**

(84) Designated Contracting States:
**BE CH DE FR GB IT LI NL**

(71) Applicant: **IMPERIAL CHEMICAL INDUSTRIES PLC
Imperial Chemical House Millbank
London SW1P 3JF(GB)**

(72) Inventor: **Woods, George
33 Parsonage Road
Withington Manchester 20(GB)**

(72) Inventor: **Dockray, Edward
8 Caldy Drive
Holcombe Brook Bury Lancashire BL0 9TY(GB)**

(74) Representative: **Houghton, Malcolm John et al,
Imperial Chemical Industries PLC Legal Department:
Patents Thames House North Millbank
London SW1P 4QG(GB)**

(54) Mixing device.

(57) A 'hold-up' mixing device (B) for use in the batch moulding of foamed plastics materials made from chemically reactive ingredients, especially polyurethanes, comprises a continuous rigid upstanding wall (b) which can stand on the base (c) of an open mould to form a mixing zone (D), an agitator (d) operable within the mixing zone and a pivotable blade (A) which in one position acts as a baffle to improve mixing and in another position acts as a scraper blade to remove residual plastics ingredients from the wall (b).

Fig.3.

Croydon Printing Company Ltd.

— 1 —

This invention relates to an improved mixing device for use in the batch moulding of foamed plastics materials.

Batch moulding of single blocks of foamed plastics is well known. For instance, US Patent Specification No.2649620 describes an apparatus and method of coating foamed plastics in which a bottomless bucket is positioned on the base of an open moulding pan, a foamable resin and a catalyst are charged to the bucket and mixed therein, and the bucket is lifted relative to the pan to allow the resin mix to spread out over the pan and foam and set. This procedure of mixing reactive chemical ingredients in a confined space before releasing the mixed ingredients to a mould is referred to as "hold-up mixing".

A similar apparatus and method of moulding foamed polyurethane products, to which this invention is directed but not confined, is described in European Patent Specification No.0013882.

A problem faced in using hold-up mixing is that of obtaining complete mixing and uniform nucleation (nucleation is the process of forming gas bubbles in a liquid) of a batch of foam-forming reaction mixture before reaction has caused a significant increase in viscosity of the mixture. As viscosity increases, spreading of the mixture becomes more difficult.

Good mixing depends on a number of factors, one of which is the use of baffles. For example, the efficiency of a turbine 'cavitation' mixer is greatly increased by the use of one or more baffles placed near to but not touching the mixer walls. It has, however, not been usual to use baffles in hold-up mixers because of the difficulty in

- 2 -

cleaning them.   Prolonged dripping of residual reaction mixture into rising foam in the mould will impair the quality of the finished moulding.

The present invention is concerned with improving the mixing of reactive foam-forming ingredients in a hold-up mixer and facilitating cleaning of the mixer.

According to the present invention there is provided a mixing device for use in the batch moulding of foamed plastics materials made from reactive chemical ingredients, the device comprising a continuous rigid upstanding wall which can stand on the base of an open mould to form therewith a mixing zone, an agitator operable within the mixing zone and a blade which forms a baffle in the mixing zone during a mixing operation and which is moveable relative to the mixer wall, in scraping contact with the wall, to remove residual mixed ingredients from the wall after a mixing operation.

Conveniently, the wall is cylindrical and axially rotatable, the blade being maintained in a scraping position after a mixing operation to remove residual ingredients from the cylindrical wall when the wall is rotated.

In a preferred aspect of the invention, the blade is pivotable about its length between a baffle position in which the blade is distanced from the wall and a scraper position in which the blade makes scraping contact with the wall.   An advantage of this aspect of the invention is that the blade provides a baffle which is clear of the mixer wall, increasing the mixing effectiveness of the agitator while avoiding the possible trapping of a viscous material if otherwise fixed in a scraping position.

It is preferred that the blade is pivoted eccentrically with respect to its cross section and is pivotable through an angle of from 60° to 120°, especially from 80° to 100°, ideally about 90°. This enables the blade to offer its full resistance to the flow of agitated ingredients during a mixing operation and to provide an acute angle of contact with the wall when in its scraping position. Thus the blade can operate to maximum effect as both baffle and scraper.

It is further preferred that the blade is lowered as it pivots from its baffle position to its scraper position. In its baffle position, when the wall stands on the base of a mould, the blade may clear the mould by about 0.5 cm. When pivoted to its scraper position, when the wall parts from the base of the mould, the blade may be level with or a little below the bottom edge of the wall.

The agitator may be of any design suitable for mixing the particular reactive ingredients employed. For example, it may be of the propellor type. The invention is, however, of particular value when used in conjunction with a turbine 'cavitation' mixer.

The mixing device may be lowered onto a mould base by means of a lifting jib, for example, of the type described in European Patent Specification No.0013882 or it may be fixed and the mould raised and lowered.

The invention may be used for the batch moulding of any foamed plastics material. In particular it is of value in the batch moulding of isocyanate-based plastics materials, including polyurethanes and polyisocyanurates, especially MDI-based plastics materials. MDI is diphenylmethane diisocyanate.

– 4 –

By way of example only, a preferred aspect of the invention is described with reference to the accompanying drawings in which

Figures 1 and 2 are plan views of a mixing device according to the invention, and

Figures 3 and 4 are isometric views of the same mixing device shown in relation to a section of the base of a mould.

In the drawings a mixing device B consists of a continuous upstanding, rotatable wall b which forms a mixing barrel, a blade A pivotable about a connecting rod e, by rotation of which the blade is positioned, and a turbine agitator d. A section c of the base of the mould forms a mixing zone D with the mixer barrel when the base and mixer barrel are placed together.

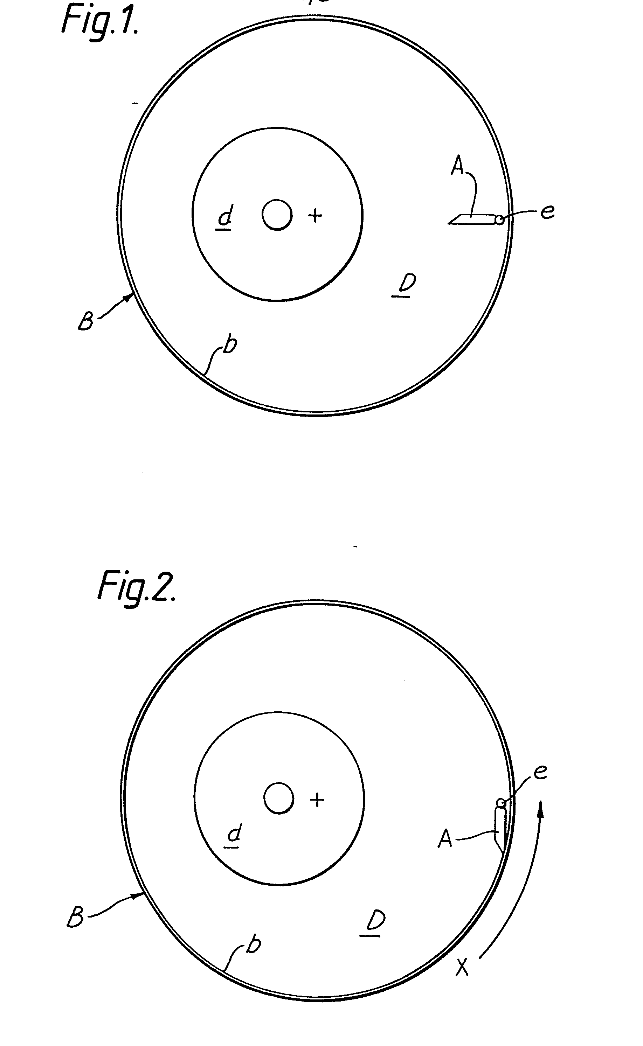

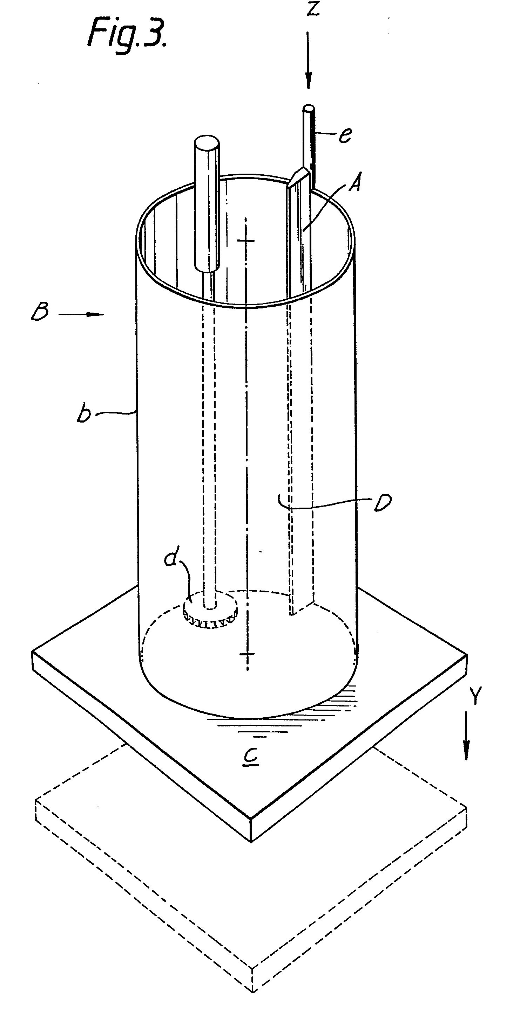

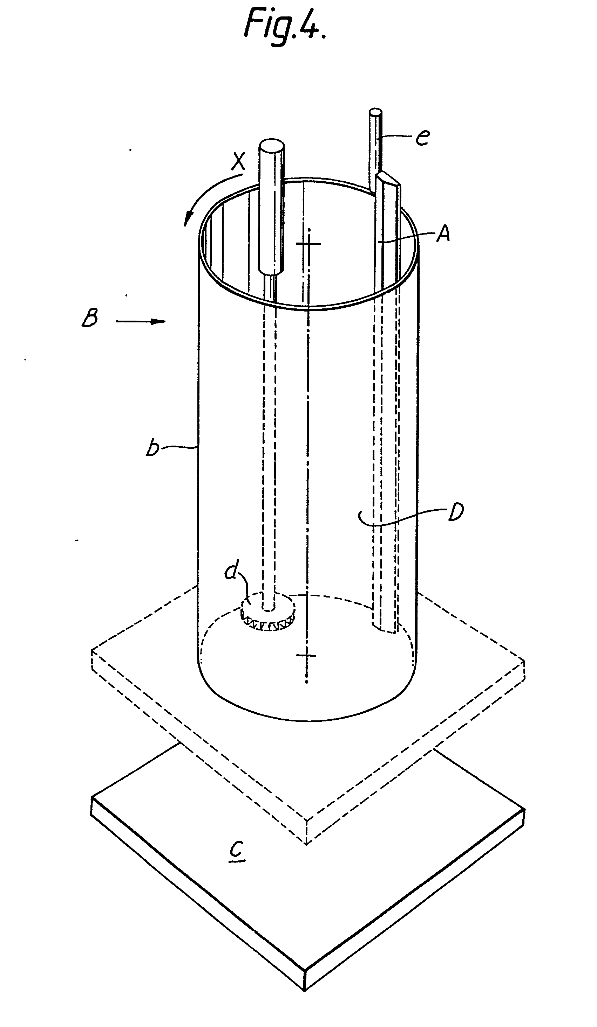

Figures 1 and 3 show the blade A in a baffle position. With the base of the mould raised in contact with the mixer barrel and the agitator d running, the mixing device is used to mix reactive foam forming ingredients. When mixing is complete, the mould is lowered as shown by arrow Y to a position indicated by the section c of the mould base in broken line. This allows reaction mixture to spread out over the base of the mould. At the same time the agitator is stopped and blade A is pivoted through 90° to a scraper position which is shown in Figures 2 and 4. As the blade A pivots between its baffle and scraper positions it is lowered, as shown by arrow Z, from a position about 0.5 cm above the mould base to a position a little below the bottom edge of the mixer barrel. When blade A reaches its scraper position, the mixer barrel is rotated in the direction shown by arrow X and residual reaction mixture is removed from the wall of the mixer barrel and
discharged to the mould below.    The blade A is returned
to its raised baffle position and is ready for another
mixing operation with the same or a different
mould.

## CLAIMS

1.      A mixing device (B) for use in the batch moulding of foamed plastics materials made from reactive chemical ingredients, the device comprising a continuous rigid upstanding wall (b) which can stand on the base (c) of an open mould to form therewith a mixing zone (D), an agitator (d) operable within the mixing zone and a blade (A) which forms a baffle in the mixing zone during a mixing operation and which is moveable relative to the mixer wall, in scraping contact with the wall, to remove residual mixed ingredients from the wall after a mixing operation.

2.      A mixing device according to claim 1 in which the blade is pivotable about its length between a baffle position in which the blade is distanced from the wall and a scraper position in which the blade makes scraping contact with the wall.

3.      A mixing device according to claim 2 in which the blade is pivoted eccentrically with respect to its cross section and is pivotable through an angle of from 60° to 120°.

4.      A mixing device according to claim 2 or 3 in which the blade is lowered as it pivots from its baffle position to its scraper position.

MJH/BH
26.7.82.

Fig.1.

Fig.2.

Fig.3.

# Fig.4.

## EUROPEAN SEARCH REPORT

| | DOCUMENTS CONSIDERED TO BE RELEVANT | | EP 82303992.0 |

| Category | Citation of document with indication, where appropriate, of relevant passages | Relevant to claim | CLASSIFICATION OF THE APPLICATION (Int Cl ³) |
|---|---|---|---|
| A | US - A - 2 316 562 (CLARK) <br> * Totality * | 1,4 | B 29 D 27/02 |
| A | DE - A - 2 208 245 (GUSSMAN) <br> * Totality * | 1,4 | |
| A,D | EP - B1 - 0 013 882 (HENNECKE) <br> * Totality * | 1 | |
| A,D | US - A - 2 649 620 (MILLER) <br> * Totality * | 1 | |
| A | US - A - 2 895 645 (PELAK) <br> * Totality * | 1 | |
| | | | TECHNICAL FIELDS SEARCHED (Int. Cl. ³) |
| A | US - A - 3 753 554 (MÜLLER) <br> * Totality * | 1 | B 29 B 1/00 <br> B 29 D 27/00 |

The present search report has been drawn up for all claims

| Place of search | Date of completion of the search | Examiner |
|---|---|---|
| VIENNA | 23-11-1982 | MAYER |